# EUROPEAN PATENT SPECIFICATION

(11) **EP 0 234 187 B1**
(45) Date of publication and mention of the grant of the patent: **21.04.1993**
(21) Application number: 87100076.6
(22) Date of filing: 07.01.1987
(51) Int. Cl.: G06F 5/00, G06F 5/01

(54) **Programmably controlled shifting mechanism in a programmable unit having variable data path widths**
Programmierbarer gesteuerter Verschiebemechanismus in einer programmierbaren Einheit mit variablen Datenwegbreiten
Mécanisme de transfert contrôlé par programme dans une unité programmable avec des largeurs de voie de données variables

(30) Priority: 24.02.1986 US 813846
(43) Date of publication of application: 02.09.1987
(73) Proprietor: SYSTEM DEVELOPMENT CORPORATION, Santa Monica, California 90406 (US)
(72) Inventor: Woodward, Thomas R., West Chester Pennsylvania 19382 (US)
(74) Representative: Eisenführ, Speiser & Partner

(56) References cited:
- EP-A- 0 047 440
- EP-A- 0 049 216
- EP-A- 0 097 834
- IBM TECHNICAL DISCLOSURE BULLETIN, vol. 28, no. 8, January 1986, pages 3579-3581, New York, US; "Bus size independent architecture"

## Description

This invention relates to a programmable shifting mechanism and more particularly to such a mechanism which can be programmably set to accommodate data segments having formats of different data path widths.

The proliferation in recent years of microprocessors, i.e., a data processor on a single integrated circuit chip, has accommodated ever increasing applications of such microprocessors in intelligent terminals, personal computers and the like. Furthermore, increasing advances in the integrated circuit field have allowed such microprocessors to be designed with increasingly greater numbers of gates per chip thus resulting in microprocessors of increasing power or throughput. Originally, the first microprocessors had 8 bit wide data path widths. The next generation of microprocessors had 16 bit wide data path widths and now microprocessors with 32 bit wide data path widths are becoming readily available in the commercial market.

A feature almost inherent in such microprocessors and one that has facilitated their design on single integrated circuit chips has been that of microprogramming or microprogram control. The term "microprogram" was first coined by Maurice Wilkes in his paper "The Best Way to Design an Automated Calculating Machine", "Report of the Manchester University Computer Inaugural Conference Manchester, England, July 1951, pp 16-18. This concept did not really become practical until the advent of the first integrated circuits which had only a few gates per chip. Those initial circuits are now referred to as small scale integrated circuits (SSI). A second generation of such chips with a greater number of chips are now known as medium scale integrated circuits (MSI) and today such circuits employing many thousands of gates are available and referred to as very large scale integrated circuits (VLSI). It is this vast increase in the number of gates per chip that has allowed for the more powerful microprocessors currently available with the resulting increase in size in the microprogram stores employed in order to handle all of the sequences of microinstructions required to control such powerful microprocessors.

A particular concept that has helped to reduce the number of microinstructions to be stored has been that of two levels of control stores where the lower level contains only each unique microinstruction rather than sequences of such microinstructions which were redundant. A smaller memory in terms of word or instruction widths was supplied to contain a sequence of encoded microinstructions which served to address the corresponding lower level microinstructions. Such a system is described in US-A-3,983,539. In such a system, the lower level control store could be a read only memory, which is cheaper than a random access memory, while the upper level memory would be a random access memory. To distinguish the shorter vertical microinstructions in the upper level memory and the longer horizontal microinstructions in the lower level memory, the upper level memory was called the micromemory, the lower level memory was called a nanomemory and the horizontal microinstructions which may be just one or more fields of unencoded control bits, were called nanoinstructions.

A particular family of microprocessors employing such a two-level control store is disclosed in US-A-4,342,078.

EP-A-0 097 834 defining the closest prior art discloses a system for placing a variable width data field having a number of bits Nf on a variable width data bus of width Nc, and comprising a modulo Nc combinational ring shifter means for aligning the first bit of the data field with a selected bit position n of the data bus, and means for determining whether Nf is <, =, or > than the number of bit positions between the selected bit position n and the last bit position Nc, and means responsive to the determining means for generating overflow signals indicating which bits of the data field remain beyond the bits placed in bit positions n to Nc, and means for placing the data field bits remaining beyond Nc in the first bit positions of the data bus.

As such microprocessors have increased in power of throughput through the increased width of their data paths from 8 to 16 and now 32 bits, data formatted for the smaller sized microprozessors cannot be readily accomodated by the processors with larger data path widths due to problems in the arithmetic unit such as when to generate a carry signal, etc., in the adder and also in the barrel switch or shifting mechanism which is employed to shift data either right or left and is also able to accomodate shifting end around or end off for different data formats.

It is an object of the present invention to provide an improved shifting mechanism that can accomodate different data formats under program control.

It is still another object of the present invention to provide an improved shifting mechanism for the simulation of a processor having different data path widths.

It is still a further object of the present invention to provide an improved shifting mechanism for shifting data segments end off and end around where the different data segments have different widths.

In order to accomplish the above identified objects, the present invention provides a programmable shifting mechanism provided in a data processor having a storage location means to receive a code specifying a shifting operation including the amount of bits that a data segment is to be shifted, said storage location means also receiving a code specifying the width of the data segment to be shifted, the shifting mechanism comprising a data bus having a width of M bits; and shifting means coupled to said data bus to receive a data segment having a width of N bits, said shifting means operating under control of a shift amount value to shift said data segment by the amount and under control of a signal specifying the width of the data segment to be shifted, characterized in that said shifting means includes input multiplexers having M inputs for each source, M being a multiple of a value K, and comprising two sets of gates which are controlled by a Data Path Width Mode signal indicating the segment size N, with N being a multiple of K, and a shift type indicating signal (BSW OP) (left shift, right shift, end around shift), each set belonging to a different shift direction, and dependent on the segment size N the gates in each set being conditioned to pass N bits and to block passage of M-N bits, a shift amount logic being controlled by the aforementioned control signals and by a shift amount signal, and comprising a gate circuit for generating one to M:K qualified shift enable signals; and a barrel shift mechanism comprising M individual barrel switch bit cells, each cell comprising a plurality of M:K multiplexers, all multiplexers being controlled by said shift amount signal, the output signal of each multiplexer in a cell being enabled by the corresponding qualified shift enable signal, the enabled signals being OR'd together to provide an output bit.

The present invention resides in a shifting mechanism which includes a plurality of levels of multiplexors for handling incoming data formats of various data path widths. The inherent wiring of these multiplexors is designed to perform shifting of data segments of the maximum size handled by the shifter. Shifting of data segments of lesser length is accomplished by specialized control of the first and third levels of multiplexors, without requiring any additional circuitry within the shifter's data paths. The first level of multiplexors, whose major purpose is to effect selection between shifting right, shifting left and shifting end around, is further used to mask out unwanted high-order bits in data segments of less than maximal length. Operation of the second level of multiplexors, which is used to effect data shifts by amounts less than the length of the shortest data segments handled by the shifter, as specified by the least significant bits of the shift command value, is not affected by the length of the particular data segment being shifted. The third level of multiplexors, which is normally used to choose between outputs of the second level of multiplexors based on the most significant bits of the shift amount value, is further used to accomplish a logical ORing of two or more of such outputs when shifts of data segments of less than maximal length are being performed. The purpose of this ORing is to copy outputs of the shifter from bit positions where inherent maximal data length shifts would place them into lower order bit positions suitable for the shorter length shift being performed.

A feature then of the present invention resides in a plurality of levels of multiplexors and the control mechanism for shifting right, shifting left and shifting end around for various data formats of different widths.

The above and other objects, advantages and features of the present invention will become more readily apparent from the following specification when taken in conjunction with the drawings wherein:
FIG. 1 is a diagram of a processor employing the present invention;
FIG. 2 is a schematic diagram of the arithmetic logic unit of the processor employing the present invention;
FIG. 3 is a diagram of the shifting mechanism of the present invention;
FIG. 4 is a schematic diagram of the input logic of the present invention;
FIG. 5 is a schematic diagram of the shift amount logic employed to control the present invention;
FIG. 6 is a diagram of the multiplexor circuitry employed in the present invention; and,
FIG. 7 is a table illustrating the operation of the present invention.

The present invention is employed in the environment of a processor and employs a two-level control store where the higher level control store contains a sequence of microinstructions for addressing the lower level control store which contains a unique set of nanoinstructions as was described above. In addition, the higher level control store can also supply nanoinstructions to the control register of the processor so as to provide an unlimited number of nanoinstructions or control words for execution by that processor so as not to limit the number of functions that the processor can execute.

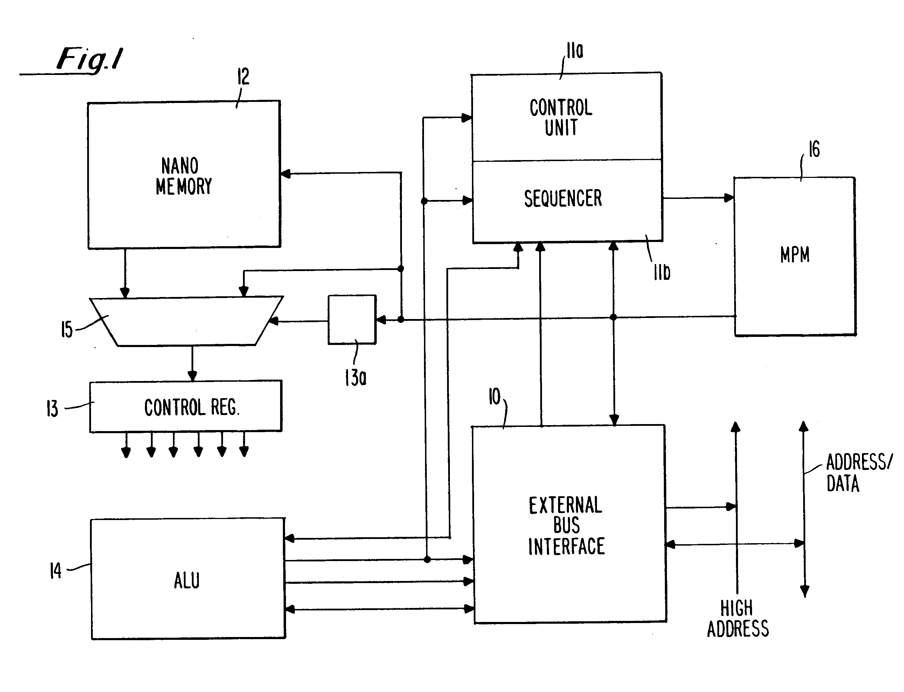

The processor in which the present invention resides is illustrated in FIG. 1 and includes external bus interface 10 which can address an external main memory (not shown) by way of the high address bus and the address/data bus, the latter of which is a bidirectional bus. The processor receives data and machine instructions from that main memory. The external bus interface sends portions of machine instruction operators to sequencer 11B. Sequencer 11B uses those operators to address micromemory 16 which in practice is not a part of the integrated circuit chip that contains the remaining functional elements of FIG. 1. In response thereto, microinstructions are received which are returned to control unit 11a, and other units, with the portion thereof being used as an address to nanomemory 12. As was indicated above, one type of such microinstruction might be a nanoinstruction which is supplied directly to control register 13. Whether the nanoinstruction comes from nanomemory 11 or from micromemory 16, its various fields as they reside in the control register 13 are then sent to arithmetic logic unit 24

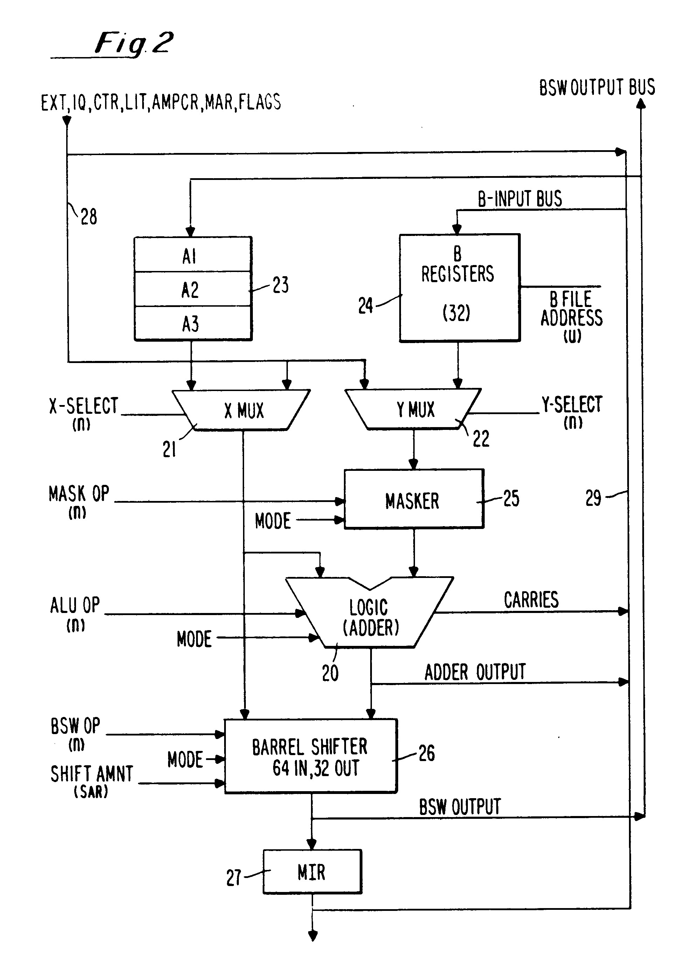

The shifting mechanism of the present invention resides in the arithmetic logic unit 14 of FIG. 1 which is shown in more detail in FIG. 2. As illustrated therein, logic unit 20 can receive data inputs from a variety of sources, designated as bus 28 or A register file 23 and the B register file 24 by way of X multiplexor 21 and Y multiplexor 22 respectively. The output of the Y multiplexor 22 is supplied to logic unit 20 by way of masking unit 25. The output of logic unit 20 as well as the output of X multiplexor 21 are supplied to barrel shifter 26. As was explained above, barrel shifter 26 can shift left or right end around by any number of bit positions as determined by the shift amount value specified by the current content of a Shift Amount Register (SAR). The output of barrel shifter 26 is supplied to memory information register 27 and also to barrel shifter output bus (BSW) 29 for transmission either to external bus interface 10 of FIG. 1 and also control unit 11a and sequencer 11b of FIG. 1.

As indicated in FIG. 2, barrel shifter 26 receives a shift amount value from the SAR and also a barrel switch operation code from the currently executed nanoinstruction as described in the above referred to Woodward et al. application. This barrel switch operation essentially specifies whether the shifter is to shift left or right, end off or to shift end around. The shift amount specified for left shifts must be the two's complement of the desired shift amount. In addition, barrel switch 26 receives a mode code specifying whether or not the data format being received by the barrel shifter is an 8 bit format, 16 bit format or a 32 bit format. In order to accommodate these various formats. all of the data path widths in the arithmetic logic unit of FIG. 2 are 32 bits wide.

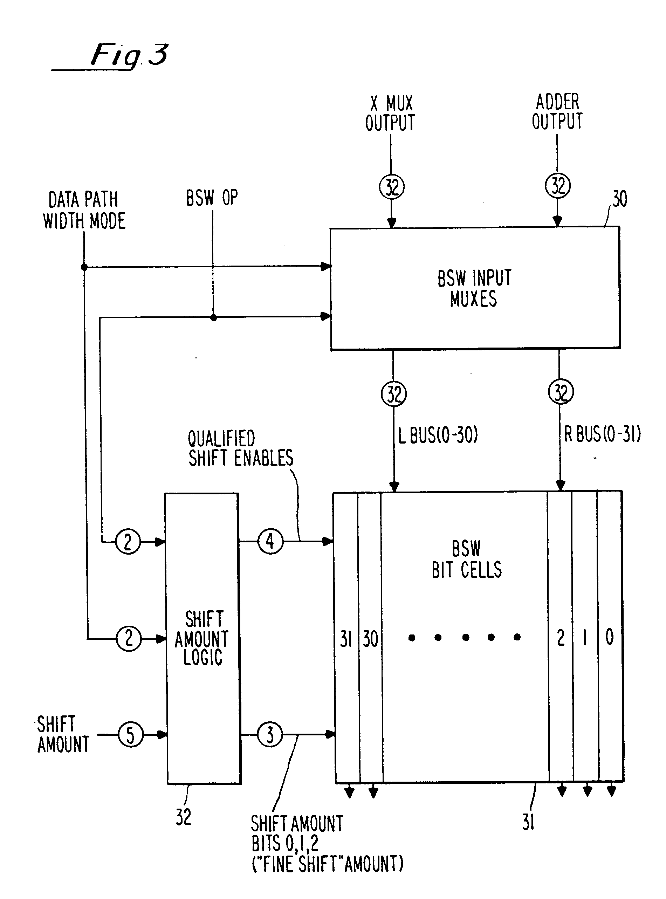

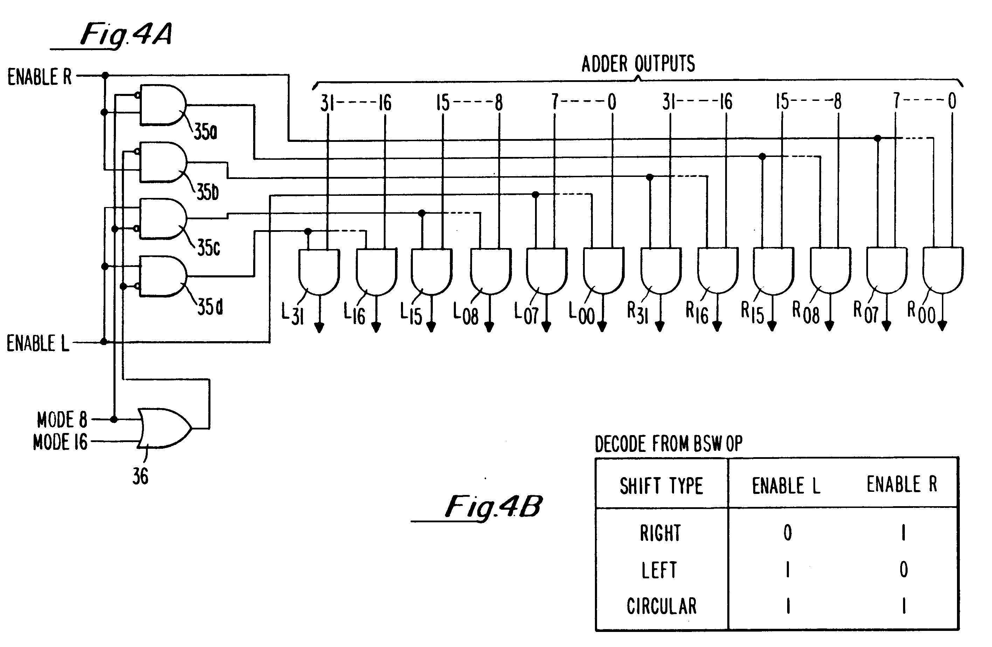

As was indicated above, the present invention resides in barrel shifter 26 which is shown in slightly more detail in FIG. 3. As illustrated therein, the main components of the present invention include barrel switch input multiplexors 30 which will be more thoroughly described below and which serve to screen out unwanted bits from a 32 bit input when the shifting mechanism of FIG. 3 is employed in a 16 bit or 8 bit mode. As indicated in FIG. 3 and also FIG. 2, the shifting mechanism receives two 32 bit inputs: the X multiplexor output and the adder output, for a total of 64 bits. However, the X multiplexor outputs are only used in double precision 32 bit mode shifting operations, which are irrelevant to the present invention. Therefore, the remainder of this description will only be concerned with the receipt of 8, 16, or 32 bits from the adder output by barrel switch input multiplexors 30. In keeping with this, the input multiplexors logic shown in FIG. 4A is a simplification of the logic actually used in the processor of the Woodward et al. application. The shifting process is actually performed by barrel switch bit cells 31 which are 32 individual bit cells as will be more thoroughly described below.

Control of the shifting mechanism of FIG. 3 is provided by shifting amount logic 32 as well as some logic in barrel switch input multiplexors 30. The three sets of values which control the operation of the shifting mechanism of FIG. 3 include a two-bit mode value which specifies whether the data segments being handled are 8, 16 or 32 bits, which mode value is supplied both to shift amount logic 32 and also to barrel switch input multiplexors 30 as was described above. The effect of this value upon input multiplexors 30 is to inhibit the output of certain bits which are not to be employed in the actual shifting mechanism for 8 bit and 16 bit mode operation. These bits are employed by shifting amount logic 32 to provide qualifying enable signals for an additional screening process on the outputs of the respective bit cells 31.

The barrel switch operation code specifies whether the shift result is to be a left-hand shift, a right-hand shift or a circular shift which can be considered either a left or right end around shift. The third value required is a 5 bit shift amount value to specify the number of bits that the end result is to be shifted, which in this case can be up to 32 depending upon which mode the shifting mechanism is in.

The 32 bit adder input bits are simultaneously supplied to two sets of logic gates in the barrel switch input multiplexors 30. That is to say, there are 64 AND gates therein, the first 32 of which receive the adder output signals for a right-hand shift and the latter 32 of which receive the same adder output bits for a left-hand shift.

In essence, the shifting mechanism of the present invention employs a plurality of levels of multiplexors which theoretically could provide an output which is any combination or permutation of the input bits from adder 20 of FIG. 2. However, the purpose of the present invention is that of providing a shifting mechanism for shifting right, left and end around and to handle data formats of 8, 16 and 32 bits. Thus, the logic for control of these plural levels of multiplexors is designed to this end.

FIG. 4A shows the circuitry of the barrel switch input multiplexors 30 of FIG. 3. As was indicated above, this circuitry receives up to 32 data bits from adder 20 of FIG. 2 and provides those data bits to two sets of 32 AND gates R₀₀--R₃₁ and L₀₀-L₃₁. As was explained above, these two sets of AND gates are employed respectively to provide for right-handed shifts and left-handed shifts. Four control AND gates 35a,...,35d receive the barrel switch operation code that includes an enable R signal and an enable L signal. OR gate 36 receives the data path width mode control signals for an 8 bit mode and a 16 bit mode. Since the output of OR gate 36 is inverted before it is supplied to control AND gates 35b and 35d as is the 8 bit mode signal when it is supplied to control AND gates 35a and 35c, output AND gates R₀₈--R₃₁ and L₀₈--L₃₁ will be disenabled and only AND gates R₀₀-R₀₇ and L₀₀--L₀₇ pass their respective input signals through to the barrel switch bit cells 32 of FIG. 3 when the 8 bit mode signal is active. The application of an enable R signal will enable output AND gates R₀₀--R₀₇ and the application of enable L signal will enable output logic gates L₀₀--L₀₇. Similarly, the application of a mode 16 signal to OR gate 36 by way of control gates 35b and 35d will disenable only output AND gates R₁₆--R₃₁ and L₁₆--L₃₁. When neither a mode 8 or a mode 16 signal are received by OR gate 36, gates R₀₀--R₃₁ will be enabled by an enable R signal and AND gates L₀₀--L₃₁ will be enabled by an enable L signal.

FIG. 4B shows the purposes of the respective enable signals where a right-hand shift is accommodated by an enable R signal, a left-hand shift is accommodated by an enable L signal and an end around or circular shift is accommodated by the application of both signals.

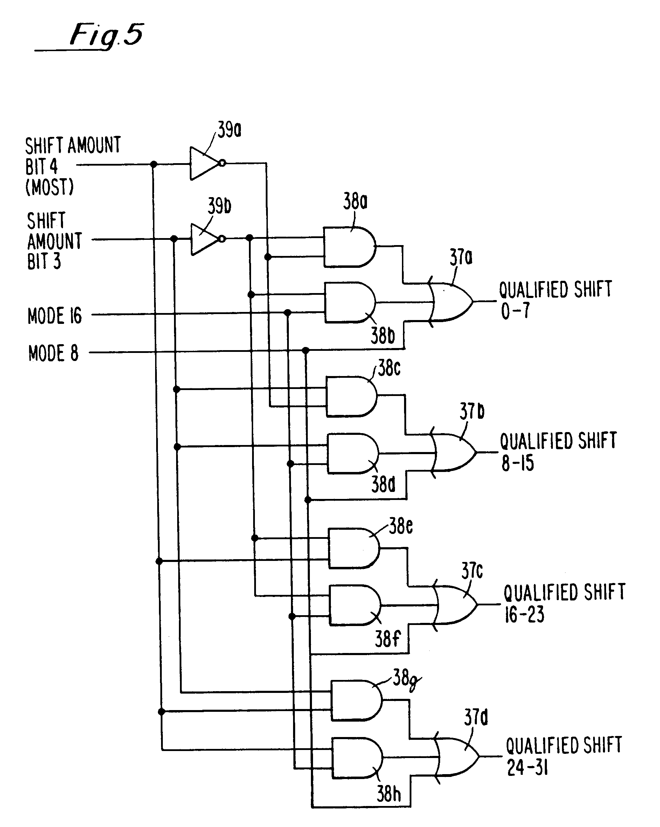

Before describing the details of an individual barrel switch bit cell 31 of FIG. 3, shift amount logic 32 will now be described as it provides the qualified shift enable signals that are employed by the individual barrel switch bit cells 31 of FIG. 3. This shift amount logic is illustrated schematically in FIG. 5.

The circuitry of FIG. 5 receives the most significant bit and second most significant bit of the shift amount value as well as the mode 16 signal and the mode 8 signal and produces from one to four qualified shift signals from OR gates 37a,...,37d. This logic will not be described in detail as the reader should be able to trace the logic from the input signals through the respective AND gates 38a,...,38h. The end result is that in a 32 bit mode, when the two most significant shift amount bits are zero, qualified shift signal 0-7 will be outputted from OR gate 37a. When the most significant shift amount bit is zero and the second most significant bit is one, OR gate 37b will produce an output signal. When the most significant shift amount bit is one and the second most significant shift amount bit is zero, OR gate 37c will produce an output signal and when both most significant shift amount bits are one, OR gate 37d will produce an output signal.

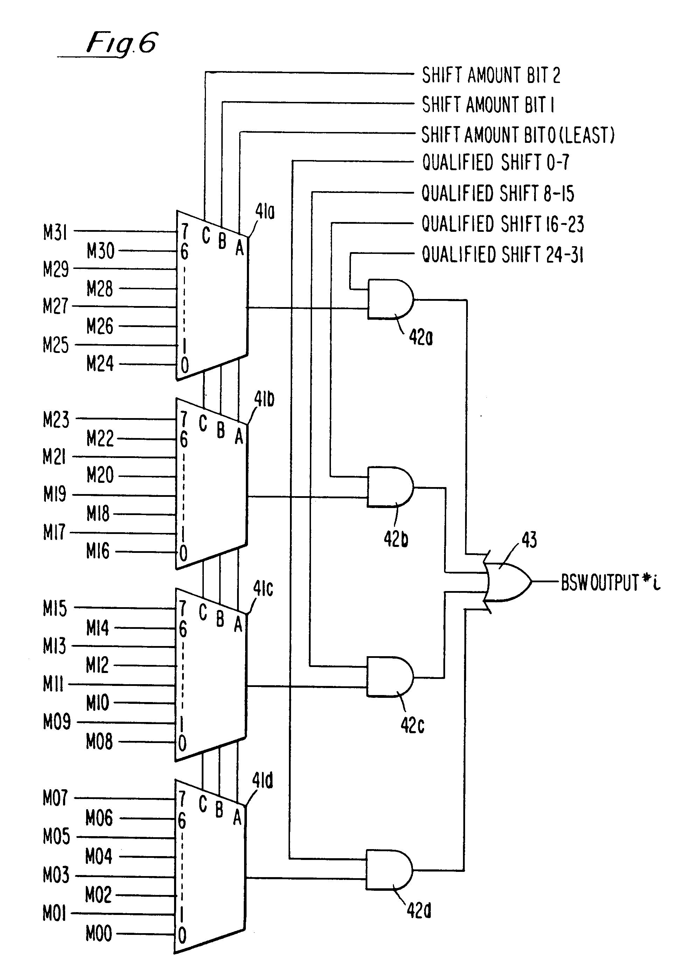

In the 16 bit mode, only the second most significant shift amount bit is effective (along with the mode 16 signal). When this second most significant shift amount bit is zero, OR gates 37a and 37c will produce output signals and when the second most significant shift amount bit is one, OR gates 37b and 37d will produce output signals. When an 8 bit mode is indicated by the mode 8 signal, the shift amount bits are not employed and all of the OR gates 37a,...,37d will produce output signals. The manner in which these outputted qualified shift signals are employed by the individual barrel switch bit cells 31 will become more readily apparent from a description of FIG. 6.

FIG. 6 is a schematic diagram of an individual barrel switch bit cell. Thirty-two of these cells go to make up the total barrel switch bit cells 31 of FIG. 3. In FIG. 6, there are four 8 to 1 multiplexors 41a,...,41d, each of which receives 8 input signals per multiplexor for a total of 32 inputs M₃₁,...,M₀₀. Each one of these multiplexors selects as an output, one of its respective inputs according to the three least significant shift amount bits which are supplied to the respective multiplexors. It will be remembered, that the two most significant shift amount bits were employed in the generation of the respective qualified shift signals by the shift amount logic of FIG. 5. These four qualified shift signals are supplied respectively to AND gates 42a,...,42d to enable those respective gates when required so as to pass through the output of the corresponding multiplexor 41a,...,41d. The output of the respective AND gates are OR'd together by OR gate 43 to produce the barrel signal output for the particular barrel switch bit cell of FIG. 6.

As was explained in the description of FIG. 5, when the shifting mechanism of the present invention is in a 32 bit mode only one of the qualified shift signals will be generated to activate a corresponding one of AND gates 42a,...,42d depending upon the values of the two most significant shift amount bits. In a 16 bit mode, either AND gates 42a and 42c will be enabled or else AND gates 42b and 42d will be enabled with their outputs being OR'd together by OR gate 43. In an 8 bit mode, all of the respective AND gates 42a,...,42d will be activated to have their outputs OR'd together by OR gate 43.

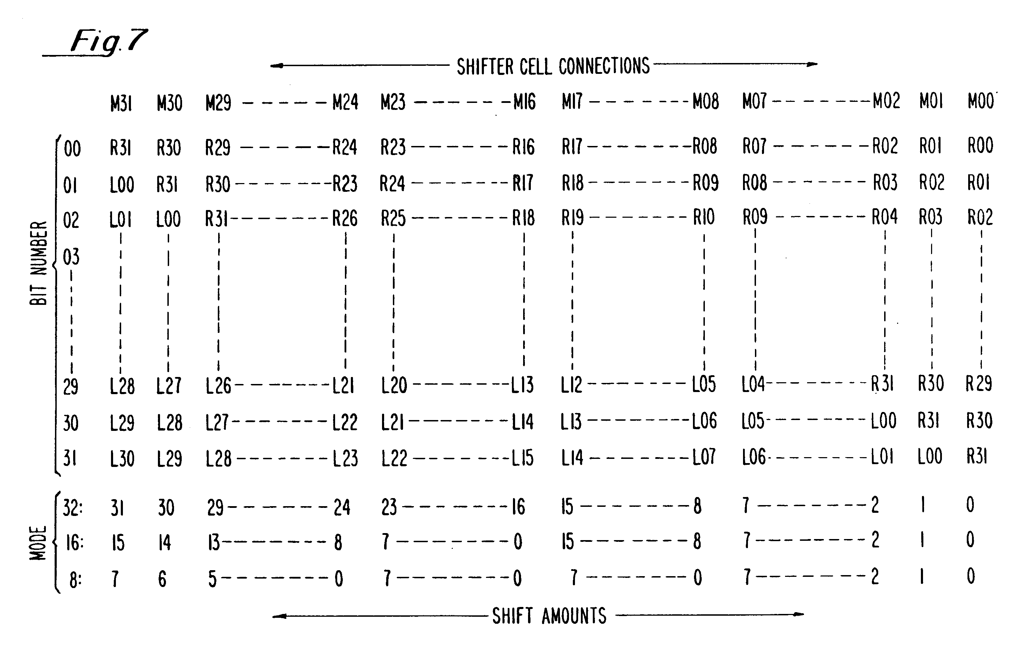

In order to illustrate the manner in which the two 32 bits outputs of barrel switch input multiplexors 30 are connected to the corresponding 32 bit inputs of each of the 32 barrel switch bit cells of FIG. 6, reference is now made to the table of FIG. 7. This table is only partially complete for the sake of brevity but should be sufficient to show the respective sequences of the corresponding input signals to the various bit cells and their respective output signals depending upon whether the shifting mechanism of the present invention is operating in an 8, 16 or 32 bit mode and also depending upon the value of the five shift amount bits which can specify a shift amount from zero to 31.

The very top row of FIG. 7 indicates the respective input signals to each of the corresponding bit cells of FIG. 6. The extreme left-hand column of FIG.7 represents the respective bit cells. Thus, from this table it can be ascertained that for bit cell zero, input M₃₁ is just R₃₁ or the most significant bit of the R bus of FIG. 3. Correspondingly, in bit cell zero, input M₃₀ is bit R₃₀ and so on until the input M₀₀ is R₀₀. Correspondingly, for bit cell one, input M₃₁ is L₀₀, input M₃₀ is R₃₁, input M₂₉ is R₃₀ and so on.

The table of FIG. 7 can be used to show the outputs of the respective bit cells for the different modes of operation and shift amount values employed to control the shifting mechanism of the present invention. The output of any given shifter bit cell can be determined by performing a logical OR on those columns in the bit cell's row of the table that are labelled at the bottom of the table by the desired shift amount and width mode. In 32 bit mode, only one column is labelled with any given shift amount. In 16 bit mode, two columns are so labelled. In 8 bit mode, four columns are so labelled. Thus, for example in a 32 bit mode, with a shift amount value of 2, the output bit cell 31 is just L₀₁, the output of bit cell 30 is just L₀₀, the output of bit cell 29 is just R₃₁. In 16 bit mode, with the same shift amount, the output of bit cell 00 will be the logical OR of R₀₂ and R₁₈. In 8 bit mode, with the same shift amount, the output of bit cell 00 will be the logical OR or R₀₂, R₁₀, R₁₈ and R₂₆.

Operation of the shifter in 32 bit mode is fairly clear from the description above. Operations in reduced data width modes may best be clarified through an example. The example will be of a right end-around shift by 2 in 8 bit mode. If the adder outputs 07 and 00 are 1, adder outputs 06 through 01 are 0, and adder outputs 31 through 08 are "X" (don't care), then the LBUS and RBUS lines L₃₁ through L₀₈ and R₃₁ through R₀₈ will be 0 due to the masking effect of the 8 bit mode line in FIG. 4A, while lines L₀₇, L₀₀, R₀₇ and R₀₀ will be 1 and lines L₀₆ through L₀₁ and R₀₆ thorugh R₀₁ will be 0 due to the effect of the ENABLE and ENABLER signals respectively. From the table in FIG. 7, the output of shifter bit cell 00 will be the OR of R₀₂, R₁₀, R₁₈ and R₂₆, all of which are 0, and hence output 00 will also be 0. Similarly, outputs 01 through 04 and 07 will be 0. Output 05 will be 1 because of the fact that R₀₇ is 1, while output 06 will be 1 due to the effect of L₀₀.

As may be inferred from FIG. 7, there will always be a 32 bit output from the switching mechanism of the present invention. In a 32 bit mode, all 32 bits are significant and are employed by the arithmetic logic unit of FIG. 2. However, in a 16 bit mode, only the first 16 bits are significant and the second 16 bits are redundant and are not employed by the rest of the arithmetic logic unit. In an 8 bit mode, the remaining 24 bits are repetitious and are not employed.

### EPILOGUE

A shifting mechanism has been described above which can provide for shifting right, shifting left or shifting end around and which can handle data formats of 8, 16 or 32 bits depending upon the mode of the shifting mechanism as programmably controlled. This shifting mechanism employs a plurality of levels of multiplexors which theoretically could provide an output which is any combination or permutation of input bits thereto. However, control logic is provided which controls the respective shifting action in response to control signals representing the shift amount required, the type of shifting operation and the width of the data format being employed.

## Claims

1. A programmable shifting mechanism provided in a data processor having a storage location means to receive a code specifying a shifting operation including the amount of bits that a data segment is to be shifted, said storage location means also receiving a code specifying the width of the data segment to be shifted, the shifting mechanism comprising
a data bus having a width of M bits; and
shifting means (26) coupled to said data bus to receive a data segment having a width of N bits, said shifting means operating under control of a shift amount value to shift said data segment by the amount and under control of a signal specifying the width of the data segment to be shifted;
characterized in that said shifting means (26) includes input multiplexers (30) having M inputs for each source, M being a multiple of a value K, and comprising two sets of gates (R₀₀-R₃₁, L₀₀-L₃₁) which are controlled by a Data Path Width Mode signal indicating the segment size N, with N being a multiple of K, and a shift type indicating signal (BSW OP) (left shift, right shift, end around shift), each set belonging to a different shift direction, and dependent on the segment size N the gates in each set being conditioned to pass N bits and to block passage of M-N bits;
a shift amount logic (32) being controlled by the aforementioned control signals and by a shift amount signal, and comprising a gate circuit (37a-39b) for generating one to M:K qualified shift enable signals; and
a barrel shift mechanism (31) comprising M individual barrel switch bit cells, each cell comprising a plurality of M:K (K to 1) multiplexers (41a-d), all multiplexers being controlled by said shift amount signal, the output signal of each multiplexer in a cell being enabled by the corresponding qualified shift enable signal, the enabled signals being OR'd (43) together to provide an output bit.

2. The shifting mechanism according to claim 1, wherein the multiplexers (41a-d) of said barrel shift mechanism (31) are coupled to said input multiplexers (30) to receive said N bits of active data and said M-N bits which are all zero.

3. The shifting mechanism according to claim 1 or 2, wherein said shift amount logic (32) is coupled to said storage location means to receive said width of a data segment to be received.

4. The shifting mechanism according to anyone of claims 1 to 3, wherein said input multiplexers (30) include two sets of M logic gates to receive two sets of the bits of said data segment, one set for a right-hand shift and the other set for a left-hand shift with one or both sets of bits of said data segment being transferred to said barrel shift mechanism (31), said logic gates being conditioned by said code specifying said data segment width to pass only N bits of one or both received data segments and to block passage of the remaining bits in each of said data segments to said barrel shift mechanism (31).

5. The shifting mechanism according to claim 4 provided in a data processor having a first storage location means to receive a code specifying a shifting operation including the amount of bits that a data segment is to be shifted and a second storage location means to receive a code specifying the width of the data segment to be shifted, wherein said shift amount logic (32) is coupled to said second storage location to receive said width of a data segment to be received.

6. The shifting mechanism according to claim 5 further including output means (42a-d, 43) coupled to different sets of the multiplexers (41a-d) of said barrel shift mechanism (31) to OR together different sets of said data segment as shifted when N is less than M.

## Patentansprüche

1. Programmierbarer Verschiebemechanismus, der in einem Datenprozessor mit einem Speicherelementmittel vorgesehen ist, um einen Code zu empfangen, der eine Verschiebeoperation einschließlich der Menge der Bits, um die ein Datensegment zu verschieben ist, spezifiziert, wobei das Speicherelementmittel ebenfalls einen Code empfängt, der die Breite des zu verschiebenden Datensegmentes spezifiziert, wobei der Verschiebemechanismus
einen Datenbus mit einer Breite von M Bits; und
eine Verschiebeeinrichtung (26) enthält, die am Datenbus angeschlossen ist, um ein Datensegment mit einer Breite von M Bits zu empfangen, wobei die Verschiebeeinrichtung unter Steuerung eines Verschiebemengenwertes, um das Datensegment um die Menge zu verschieben, und unter Steuerung eines die Breite des zu verschiebenden Datensegmentes spezifizierenden Signals arbeitet;
dadurch gekennzeichnet, daß die Verschiebeeinrichtung (26) Eingangsmultiplexer (30) mit M Eingängen für jede Quelle, wobei M ein Mehrfaches eines Wertes K ist, und mit zwei Gruppen von Gattern (R₀₀ bis R₃₁, L₀₀ bis L₃₁), die von einem Datenwegbreitenmodussignal, das die Segmentgröße N anzeigt, wobei N ein Mehrfaches von K ist, und einem Verschiebeartanzeigesignal (BSW OP) (nach links verschieben, nach rechts verschieben, ringverschieben) gesteuert werden, wobei jede Gruppe einer unterschiedlichen Verschieberichtung zugeordnet ist und in Abhängigkeit von der Segmentgröße N die Gatter in jeder Gruppe so eingestellt sind, daS N Bits durchgelassen und M-N Bits gesperrt werden;
eine Verschiebemengenlogik (32), die von den zuvor erwähnten Steuersignalen und einem Verschiebemengensignal gesteuert wird und einen Gatterschaltkreis (37a bis 39b) zur Erzeugung von einem bis M:K qualifizierten Verschiebefreigabesignalen aufweist; und
einen Barrel-Verschiebemechanismus (31) mit M einzelnen Barrel-Schaltbitzellen enthält, von denen jede Zelle eine Vielzahl von M:K (K bis 1) Multiplexer (41a bis d) aufweist, wobei sämtliche Multiplexer vom Verschiebemengensignal gesteuert werden, das Ausgangssignal jedes Multiplexers in einer Zelle von dem entsprechenden qualifizierten Verschiebefreigabesignal freigegeben wird, die freigegebenen Signale mittels einer ODER-Logik (43) miteinander verknüpft werden, um ein Ausgangsbit zu erzeugen.

2. Verschiebemechanismus nach Anspruch 1, bei welchem die Multiplexer (41a bis d) des Barrel-Verschiebemechanismus (31) an die Eingangsmultiplexer (30) angeschlossen sind, um die N Bits der aktiven Daten und die M-N Bits, die sämtlich Null sind, zu empfangen.

3. Verschiebemechanismus nach Anspruch 1 oder 2, bei welchem die Verschiebemengenlogik (32) an das Speicherelementmittel angeschlossen ist, um die Breite eines zu empfangenden Datensegmentes zu empfangen.

4. Verschiebemechanismus nach einem der Ansprüche 1 bis 3, bei welchem die Eingangsmultiplexer (30) zwei Gruppen von M Logikgattern aufweisen, um zwei Gruppen von den Bits des Datensegmentes zu empfangen, und zwar die eine Gruppe für eine Verschiebung nach rechts und die andere Gruppe für eine Verschiebung nach links, wobei eine oder beide Gruppen von Bits des Datensegmentes an den Barrel-Verschiebemechanismus (31) übermittelt werden, wobei die Logikgatter von dem die Datensegmentebreite spezifizierenden Code so eingestellt werden, daß nur N Bits des einen oder der beiden empfangenen Datensegmente durchgelassen werden und die Weiterleitung der übrigen Bits in jedem der Datensegmente zum Barrel-Verschiebemechanismus (31) gesperrt wird.

5. Verschiebemechanismus nach Anspruch 4, der in einem Datenprozessor mit einem ersten Speicherelementmittel, um einen Code zu empfangen, der eine Verschiebeoperation einschließlich der Menge von Bits spezifiziert, um die ein Datensegment zu verschieben ist und einem zweiten Speicherelementmittel vorgesehen ist, um einen Code zu empfangen, der die Breite des zu verschiebenden Datensegmentes spezifiziert, bei welchem die Verschiebemengenlogik (32) an das zweite Speicherelement angeschlossen ist, um die Breite des zu empfangenden Datensegmentes zu empfangen.

6. Verschiebemechanismus nach Anspruch 5, welches außerdem Ausgangsmittel (42a bis d, 43) enthält, die an unterschiedliche Gruppen von Multiplexern (41a bis d) des Barrel-Verschiebemechanismus (31) angeschlossen sind, um unterschiedliche Gruppen des Datensegmentes während der Verschiebung mittels einer ODER-Logik miteinander zu verknüpfen, wenn N kleiner als M ist.

## Revendications

1. Mécanisme de décalage programmable prévu dans un processeur de données ayant un moyen d'emplacement de mémorisation pour recevoir un code spécifiant une opération de décalage comprenant la quantité de bits dont un segment de données doit être décalé, ledit moyen d'emplacement de mémorisation recevant également un code spécifiant la largeur du segment de données à décaler, le mécanisme de décalage comprenant
un bus de données ayant une largeur de M bits ; et
un moyen de décalage (26) connecté audit bus de données pour recevoir un segment de données ayant une largeur de N bits, ledit moyen de décalage fonctionnant sous la commande d'une valeur de décalage pour décaler ledit segment de données de la valeur et sous la commande d'un signal spécifiant la largeur du segment de données à décaler ;
caractérisé en ce que ledit moyen de décalage (26) comprend des multiplexeurs d'entrée (30) ayant M entrées pour chaque source, M étant un multiple d'une valeur K, et comprenant deux ensembles de portes (R₀₀-R₃₁, L₀₀-L₃₁) qui sont commandés par un signal mode largeur de chemin de données indiquant la taille de segment N, N étant un multiple de K, et un signal indiquant le type de décalage (BSW OP) (décalage à gauche, décalage à droite, permutation circulaire), chaque ensemble appartenant à un sens de décalage différent et, en fonction de la taille de segment N, les portes de chaque ensemble étant conditionnées pour transmettre N bits et pour bloquer le passage de M-N bits ;
une logique de valeur de décalage (32) commandée par les signaux de commande ci-dessus mentionnés et par un signal de valeur de décalage, et comprenant un circuit de portes (37a-39b) pour émettre un à M : K signaux de validation de décalage qualifié ; et
un mécanisme de décalage à tambour (31) comprenant M points mémoire individuels de commutateur à tambour, chaque point comprenant une pluralité de M : K (K à 1) multiplexeurs (41a-d), tous les multiplexeurs étant commandés par ledit signal de valeur de décalage, le signal de sortie de chaque multiplexeur dans un point étant autorisé par le signal de validation de décalage qualifié correspondant, les signaux validés étant soumis ensemble à une fonction OU (43) pour donner un bit de sortie.

2. Mécanisme de décalage selon la revendication 1, dans lequel les multiplexeurs (41a-d) dudit mécanisme de décalage à tambour (31) sont connectés auxdits multiplexeurs d'entrée (30) pour recevoir lesdits N bits de données actives et lesdits M-N bits qui sont tous zéro.

3. Mécanisme de décalage selon la revendication 1 ou 2, dans lequel ladite logique de valeur de décalage (32) est connectée audit moyen d'emplacement de mémorisation pour recevoir ladite largeur d'un segment de données à recevoir.

4. Mécanisme de décalage selon l'une quelconque des revendications 1 à 3, dans lequel lesdits multiplexeurs d'entrée (30) comprennent deux ensembles de M portes logiques pour recevoir deux ensembles des bits dudit segment de données, un ensemble pour un décalage à droite et l'autre ensemble pour un décalage à gauche, l'un ou les deux ensembles de bits dudit segment de données étant transférés audit mécanisme de décalage à tambour (31), lesdites portes logiques étant conditionnées par ledit code spécifiant ladite largeur de segment de données pour transmettre uniquement N bits de l'un ou des deux segments de données reçus et pour bloquer le passage des bits restants dans chacun desdits segments de données vers ledit mécanisme de décalage à tambour (31).

5. Mécanisme de décalage selon la revendication 4, prévu dans un processeur de données ayant un premier moyen d'emplacement de mémorisation pour recevoir un code spécifiant une opération de décalage comprenant la quantité de bits dont un segment de données doit être décalé et un second emplacement de mémorisation pour recevoir un code spécifiant la largeur du segment de données à décaler, dans lequel ladite logique de valeur de décalage (32) est connectée audit second emplacement de mémorisation pour recevoir ladite largeur d'un segment de données à recevoir.

6. Mécanisme de décalage selon la revendication 5, comprenant en outre un moyen de sortie (42a-d, 43) connecté à différents ensembles des multiplexeurs (41a-d) dudit mécanisme de décalage à tambour (31) pour soumettre ensemble à une fonction OU différents ensembles dudit segment de données au décalage lorsque N est inférieur à M.
